# EUROPEAN PATENT SPECIFICATION

(11) **EP 3 369 874 B1**
(45) Date of publication and mention of the grant of the patent: **06.09.2023**
(21) Application number: 17425022.5
(22) Date of filing: 01.03.2017
(51) Int. Cl.: E04F 15/024, F24D 3/12, F24D 3/14

(54) **A MODULAR FLOATING SCREED WITH INCORPORATED HEATING ELEMENTS**
MODULARER AUFGESTÄNDERTER BODEN MIT EINGEBETTETEN HEIZELEMENTEN
SOL SURELEVÉ MODULAIRE AVEC ÉLÉMENTS CHAUFFANTS INCORPORÉS

(43) Date of publication of application: 05.09.2018
(73) Proprietor: Casprini, Matteo, 50052 Certaldo (FI) (IT)
(72) Inventor: Casprini, Matteo, 50052 Certaldo (FI) (IT)
(74) Representative: Emmi, Mario

(56) References cited:
- EP-A1- 2 320 007
- EP-A2- 2 933 396
- KR-Y1- 200 400 444
- US-A1- 2009 084 046

## Description

### Technical field

The present invention relates to the technical field concerning the construction of raised walkable surfaces, for example in the form of a raised screed.

In particular, the invention refers to a raised walkable surface, for example a screed, constructed in such a manner so as to result in being fully assemblable/disassemblable, thus allowing also an easy access to the underlying surface, having heating elements integrated in itself.

### Background art

Screed construction has been prior art for a long time.

Concerning construction industry, screed is the constructive horizontal element which is used to achieve one or more of the following purposes: flattening a surface, thus making it perfectly flat; distributing the load of the elements above; receiving the final flooring. The screed thickness is variable depending on the ambient type (for example, inside a building can be comprised between 4 and 8 cm). Its purpose is to make the underlying concrete substrate flat (loft or flooring), secondly, it is necessary to contain pipes and service cables. If the flooring above (ceramics, stone or wood) is laid by gluing, it is exactly on the screed that the glue is laid. The screed, according to the prior art, is therefore poured in place and generally consists of three materials used in appropriate proportions: cement, aggregate (sand and/or gravel, for example) and water. The dose of the various elements varies depending on the external environment and on the location of it (internal or external, for civil or industrial purpose). Quite often additive or other materials are added to the typical ones (common examples are polystyrene, used to lighten screed, or quartz, used to smooth it or make it more tough). To strengthen it and make it more collaborating, an iron net can be used, as in the case of concrete lofts.

As described above, it is therefore obvious that, according to the prior art, the constructive technique of screed, or, anyway, of a walkable surface in general, leads de facto to the construction of fixed not disassemblable elements and therefore, once placed, they cannot be removed except that with a demolition action.

In that sense, if for example a maintenance service is necessary on the accessories placed under the screed, the service proves to be not simple at all and, on the contrary, it is invasive and destructive.

With the purpose to solve said technical inconveniences, solutions of the modular type exist, that is modules placed side by side each other.

Generally, each module is made by a simple carrying panel placed on supporting foot, so as to make it raised. In this way, the space between the panel and the carrying level creates the housing of potential plant design.

This solution creates a better maintenance access to the underlying areas but has also some technical inconveniences.

Generally, panels are simply placed side by side each other on supporting feet but not fixed at all, and, if on one side it simplifies their mobility, on the other side it can raise some stability issues. Other locking systems can provide glue which makes the installation longer and obviously makes more difficult the mobility of the module for maintenance services.

In addition, such system of modular screeds does not integrate any heating system which has to be provided apart in the gap space that is formed in the installation and requiring an additional assembly action to be provided before the installation of the screed modules.

Further prior art floor modules are known from KR 200 400 444 Y1 , US 2009/084046 A1, EP 2 320 007 A1 and EP 2 933 396 A2.

### Disclosure of the invention

It is therefore the aim of the present invention to provide an innovative module for a walkable surface, for example a raised screed, which solves said technical inconveniences.

In particular, the aim of the present invention is to provide a module which allows an easy accessibility to the underlying surface, thus resulting in being easily disassemblable but also stable at the same time.

In addition, the aim of the present invention is to provide a module which integrates in itself a heating system, which guarantees a fixing system at the same time, both of modules with one other and of various elements composing each module, being applicable/removable rapidly, in such a manner so as to allow an immediate access to parts of the module itself or to allow a rapid removal of a module and a rapid re-positioning of itself as well.

These and other aims are therefore obtained through the present module for building a walkable surface, preferably a screed, according to claim 1.

Such module (1) comprises a top panel (10) suitable to form a walkable surface.

Therefore, the top panel can therefore be subsequently covered with finishing elements or integrate in itself such finishing elements forming the final flooring (for example a parquet).

It will have well-known technical features in order to fulfill its load-carrying function as walkable element.

According to the invention, the module (1) further comprises the following elements:
- A bottom panel (20) generally sized to be load-carrying;
- A surface of thermally insulating material (30), and a heating device (50) configured for emanating heat, both comprised between the bottom panel (20) and the top panel (10), the insulating surface being in form of a prebuilt panel of insulating material (30) placed above the bottom panel (20) and with the heating device (50) comprising a pipe for the passage of a vector fluid arranged over the thermally insulating surface such that said pipe is comprised between the top panel (10) and the panel of insulating material (30);

In order to keep such elements of the module connected together, that is stacked, connecting means (100) are provided applicable, for example, following the assembly of the module, configured in such a manner so as to exert a mechanical action according to an approaching direction of the top panel (10) to the bottom panel (20). In this way, the various elements of the module result fixed one another and the module is ready for use. Such connecting means are further configured in such a manner so as to result in being removable (that is fastening connecting means) in such a manner that, in correspondence to their removal, one or more of said elements constituting the module result in being disassemblable each other.

In this way, all the aforesaid technical inconveniences are easily solved.

The module integrates in itself a heating element together with a thermally insulating element arranged to facilitate the heat irradiation upward. The heating element allows to irradiate heat and such a kind of configuration allows a good heat irradiation towards the walkable surface, thus simply creating a module assemblable with other modules for creating a screed able to emit heat. Therefore, heating systems are not required to be installed below the raised screed as separated element.

In this way, the module forming the screed, or the surface in general, can be installed on a potential raised support, also with the smallest heights, as the potential heating system is integrated into the module itself and has not to be integrated into the space that is formed between the screed and the carrying level. In addition, this solution allows a remarkable time saving during the assembly, as it does not require first the installation of the heating system and then the installation of the overhead screed.

The used connecting means are of the mechanical type, therefore they do not provide glues, and, for this reason, they are easily removable and once removed, they allow an easy removal of the parts of each module, if this is considered necessary for the maintenance.

A surface of insulating material (30), in form of a panel, is placed above the bottom panel (20) and with the heating device (50) comprised between the top panel (10) and such a surface of insulating material (30).

This solution has the advantage of optimizing the heat irradiation towards the flooring in use to be stepped on, that is the top surface.

Advantageously, the above-described module is of the raised type, as means are provided to raise it to the desired level in respect to the supporting surface.

Such means are advantageously adjustable in height.

It is therefore possible to apply the system to any height of the finished floor, for example up to 1 meter.

Further advantages are deducible from the other dependent claims.

It is also described here, obviously, a screed or a flooring, therefore a walkable surface, formed by the assembly of two or more modules as described.

### Brief description of drawings

Further features and advantages of the device, according to the invention, will result to be clearer with the description that follows of some embodiments, made to illustrate but not to limit, with reference to the attached drawings, wherein:
- Both figures from 1 to 3 show an exploded view, displaying various components of the single module forming a raised screed object of the invention;
- Figures from 4 to 6 show some axonometric view of the raised screed as assembled, highlighting some components of it;
- Figure from 7 to 10 show some executive details, including the processing and the drilling for the slot of the fastening screw;
- Figure 11 is an exploded view of the supporting foot to support the raised screed;

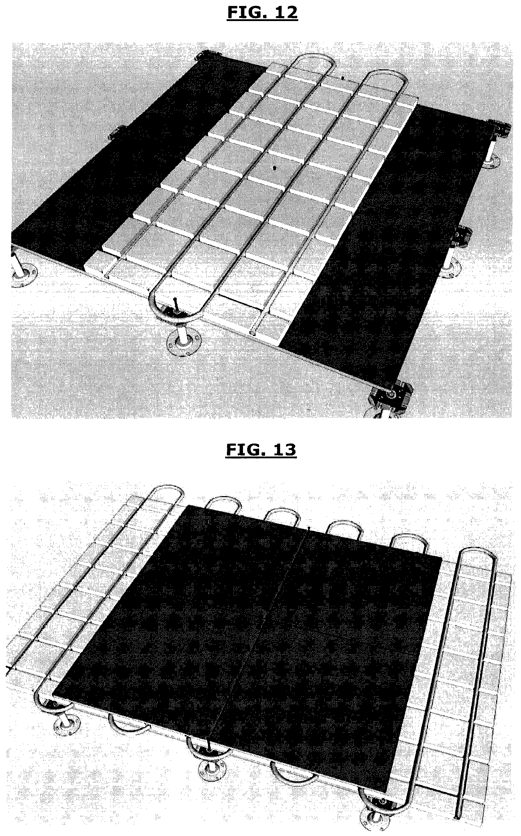

- Figure 12 and 13 show further axonometric view;
- Figure 14 and figure 15 show an alternative solution of the supporting foot which is needed to raise the module, wherein a clamping nut is used to fix the required height.

### Description of some preferred embodiments

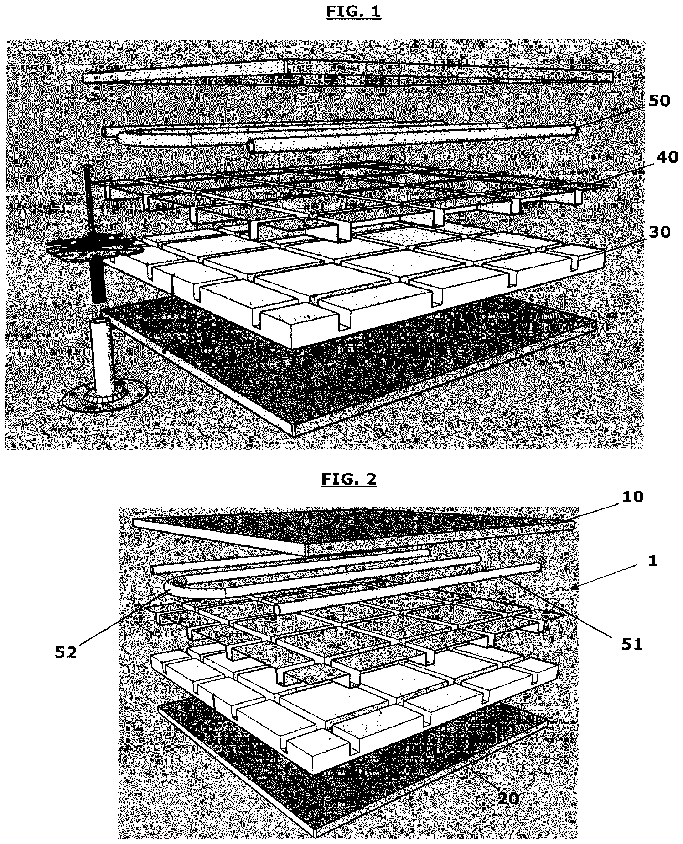

Figure 1 shows a module suitable for creating a raised screed or of a flooring in general, and therefore of a walkable surface, according to the present invention.

In the present invention, the term "screed" means any walkable surface, and therefore also a modular flooring in general and the term "screed" is not to be considered with limiting meaning.

The raised screed, as explained below, does not require the use of glues for its assembly and therefore it is fully disassemblable and/or re-assemblable. In addition, it is structured in such a manner that the system of raised support, that is the system allowing to make the height of the screed itself variable from the ground, allows the purpose of connecting element, by stacking one another the element of the single module, and at the same time, by fixing a module to an adjacent one for the assembly of the screed.

Therefore, the use of glue for fixing the module to the adjacent one results only optional in the case of need to make airtight the lateral edge which connects a module and the adjacent one.

Describing more in details the invention, such a raised screed is composed by modules (one or more than one). Obviously, in the case of more than one module, these can be placed side by side, in such a manner so as to cover a predetermined area assembling the screed.

Such modules are for example highlighted in figures 1, 2, 3 and a module can be put side by side to another one without requiring the use of glue. For this reason, the single module, if required, can be removed for accessing to the underlying surface, for example in order to inspect predetermined areas.

Each module, in turn, as again described in more detail in figures 1 to 3, is made of more overlapping elements and obviously, easily disassemblable one another, as, in the preferred embodiment of the invention, the same fixing system that fix a module to its adjacent one are advantageously used also to stack the elements of the module at the same time. This entails that each part of the module can be easily removed and replaced, for example in the case of repairing.

Fixing systems, as explained further, are of the mechanic type and exert a pressure in the axial direction and are thus defined of the axial type.

Obviously, two independent mechanic systems with axial action, one of which for fixing a module to an adjacent one and one for fixing one another the stacked parts assembling the module, could be used.

Nevertheless, as said, the invention provides at least an axial-action system which performs the function of stacking and fixing a module to an adjacent module.

Figure 1 or figure 2, therefore, show a module 1 which can be put side by side with other identical modules.

Therefore, the single module provides two external panels (10, 20), that is a top panel 10 and a bottom panel 20.

The top panel 10 is a carrying panel, for example made of Gres, marble or similar materials.

The bottom panel is equal to the top one, that is a carrying one.

Therefore, such panels are designed for withstanding loads through the choice of suitable materials and thicknesses.

Therefore, the top panel 10 forms the walkable surface and further finishing elements can be applied on it, such as tiles, parquet, etc. Therefore, the finishing elements can be bought separately depending on personal tastes and can be applied with glues and adhesives commonly used in the technical field, once the whole screed is assembled.

As alternative, the top surface 10 can integrate in itself finishing elements (for example Gres, PVC, parquet, marble, etc.), shaped according to the form of the top surface, or it can be the end material (with potential decorative processing).

The other elements are included between these two panels (10, 20), providing:
- A panel 30 of insulating material, in such a manner so as to retain heat, for example polystyrene, Styrofoam or similar ones);
- A thermal conductive layer 40 (for example of aluminum);
- A pipe 50 forming a heating system for transferring heat.

Going into the descriptive detail of the invention, the insulating panel 30 is processed in such a manner so as to form a series of corridors engraved on its surface that can intersect one another with right angle.

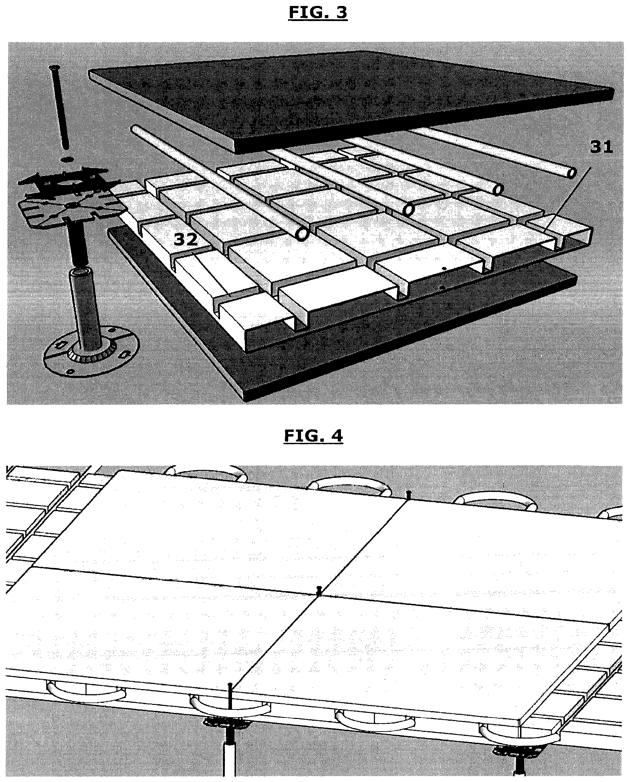

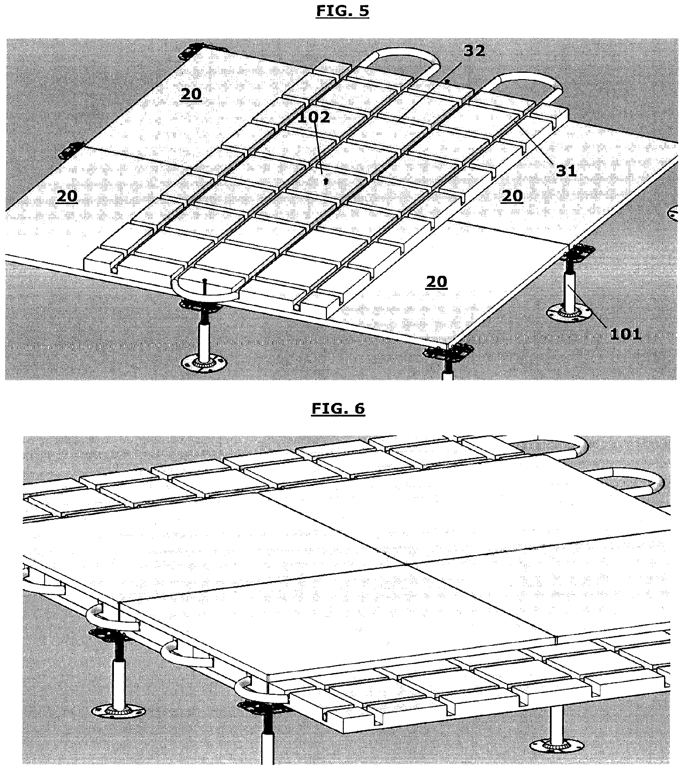

For example, figure 5 shows very well such a shape, being removed the top panel. The figure shows for each panel 30 a series of longitudinal parallel one another corridors 31 and a series of transverse corridors 31, intersecting the longitudinal corridors. The same can be seen also in figure 3.

The corridors are of such a size that they can contain the provided pipes inside them, that is the heating system.

The pipes are necessary for the passage of a warm fluid (for example, liquid like water as inside conventional heating radiators).

Such pipes are connected to a collector and from the collector to a pump and a normal boiler which heats up the circulating water.

The pipe can be one unique flexible pipe passing along corridors following a set path.

As alternative, it can be modular itself and made of rectilinear sections 51 linking to curved sections 52 which connect two rectilinear sections placed side by side.

In all cases, as it is explained further, the accessibility to the various parts of each single module allows the repairing/replacement also of segments of broken pipes.

Figure 5, for clarity purpose, shows four modules placed side by side and wherein the top panel has been removed. In this way, the passage of pipes provided with circular connecting parts, joining rectilinear segments each other, can be seen very well.

The panel 30 of insulating material (for example, in the case of Styrofoam or polystyrene) can be advantageously made in a mould, thus resulting in rapid manufacturing and low-cost.

The top layer is made of aluminum, metal in general or other materials with good thermal-conductive characteristics.

The purpose of the layer 40, also shaped to trace the form of the panel 30 and to couple to it as per figure 2, is to irradiate heat upwards, that is towards the walkable panel 20 and to level out the spreading onto the top panel.

The insulating layer 30 is necessary to avoid heat loss downwards.

In this way, such a coupling of the insulating panel with the layer 40 forming said corridors, in which the pipes are passing, guarantees the maximum heat radiation towards the walkable surface 10, thus minimizing dispersions downwards, that is towards panel 20.

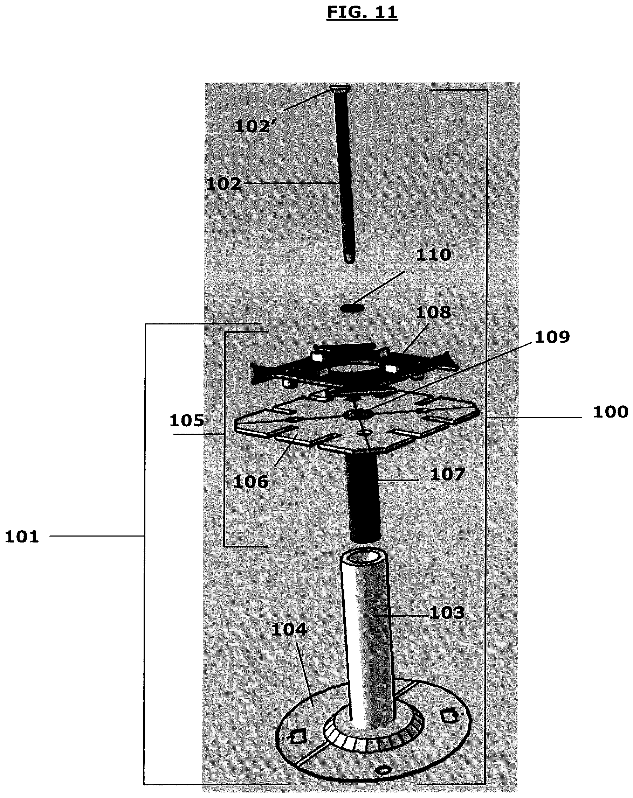

Going further with the structural description of the invention, the fixing of the components of each module is obtained de facto thanks to a mechanical clamping system of the axial type 100, for example as shown in figure 11.

It is formed by a supporting axis drilled axially and in which a clamping screw 102 inserts itself (or, similarly, a rivet, a bolt or similar ones).

The supporting axis 101 provides a duct 103 having a supporting base 104, for example circular one, in such a manner that such a duct can be placed firmly on a surface (that is the flooring), thus resulting emerging upwards from it.

The duct 103 is axially hollow, in such a manner so as to hold the proper support component 105 of the module, that is the surface 106 in contact with the bottom panel. In fact, such a support component 105 is formed by said surface 106 and an axis 107 configured to insert itself in the canal formed by duct 103.

It is possible to regulate the extraction amount of the support element 105 in respect to the duct 103, as the axis 107 is threaded and inserts itself by screwing in the canal of duct 103.

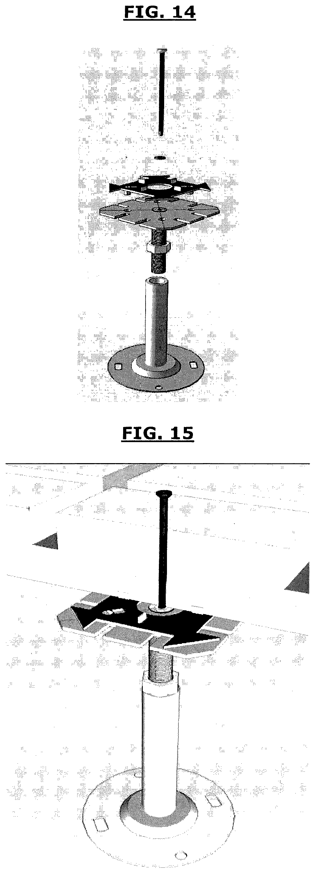

In a variation of the invention (as shown in figure 14 and 15), generally for heights over 10 cm, it is possible to use an adjustment nut screwed on axis 107, which pushes and is at the end stroke on the edge of duct 103, thus constraining the selected height.

In both ways, the overall heights of the whole axis 101 is easily adjustable, depending on needs, by varying the raising heights of the modules from the ground.

In its turn, the axis 107 is axially holed with a hole 109 leading to the surface 106. In this way, the screw 102 is insertable and screwable in the hole 109 which provides a complementary threading, compacting and clamping the elements that intersects as the latter ones are clamped between the enlarged head 102' of the screw and the support surface 106.

Therefore, if a module is, for example, perforated at its center point with a through hole, once leaning on the plate 106 in such a manner that its hole is aligned with the hole 109, it is enough to pass the screw up to intercepting the hole 109 and clamping the screw so that this stacks the module, namely its elements that compose it. In case of maintenance, for example, inspection of the piping 50, it is sufficient to loosen and remove the screw to detach the top panel, the layer and the other elements if necessary.

For a better clamping, as also explained below, it is provided the use of a flat washer 110 that is interposed between the head 102' and the surface of the top panel 10.

Optionally, it can also be provided a head gasket 108 which leans on the surface 106 (thus interposed between the surface 106 and the bottom panel). It is made of plastic and provided with spacing wings for facilitating the alignment of the four edges that are leaning on the same surface and to avoid possible creaking.

It has surprisingly been found that a suitable processing or shape of the perimeter of each module means that the axial clamping system can effectively perform the locking function of a module with an adjacent module and, at the same time, fix one another the elements forming the module itself and described above.

Figures from 7 to 10 show in detail such a solution.

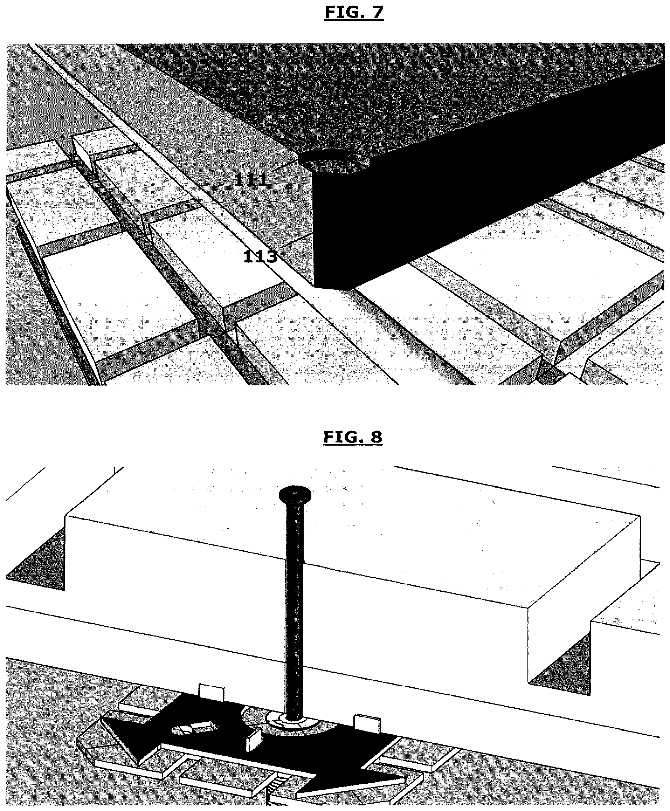

The top panel 10 and the bottom panel 20 of each module have a finishing in correspondence of their four corners that is very well highlighted in figure 7.

The finishing consists of a removal of material in correspondence of the four corners.

In the top panel, that removal forms an angular countersink 111 (ninety-degrees angle) in correspondence of the corners. It penetrates into the thickness of such a panel for such a quantity as to hold the thickness of the washer 110 and therefore of the head of the screw 102' that in this way, through the washer, is flush with the panel. Contextually, the angle is removed so as to generate a flat side 113. The side 113 is preferably orthogonal to the diagonal of the panel.

The formation of the countersink, as shown in figure 7, is generally carried out only in the top panel, while the top and bottom panel provide a bevel 113.

The countersink 11 has a dual effect. The washer exerts a pressure on the surface 112 of the panel, generated by said countersink 111, thus creating a higher-pressure surface of action, useful also to prevent the separation of a module from the adjacent one.

Furthermore, the screw is flush with the panel, thus not altering the surface of the same panel to the application of potential finishing elements.

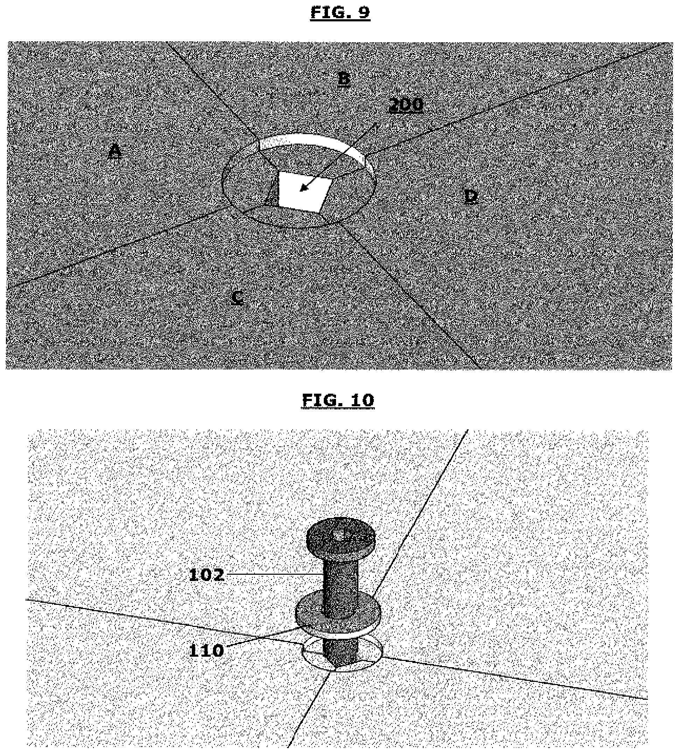

In this way, as shown in figure 9, when four modules (A, B, C, D) are put side by side around their rounded corner, the four finished joining corners form a through hole 200 in the top and bottom panel with a countersink at the head, indeed as shown in figure 9.

As shown in figure 10, it is possible to insert the screw 102 with its washer 110, such a screw is screwed on the support axis 101 placed below in axis with the hole 200 which is formed by putting the panels together. In this way, the screw passes through the thickness of the modules (in the sense that slides touching their thickness) and inserts itself into the hole 109. The hole 109 is threaded, so the clamping of the screw against the plate 106 stacks together a module to another one and simultaneously all the components interposed between the modules.

The use of the washer 110 better distributes the clamping pressure and therefore creates a better stacking.

The system of axial clamping screw (including the solutions equivalent to rivets, bolts, etc.) are advantageous due to their simplicity, as simply screwing/unscrewing action allows to fasten the whole system or the disassembly of the screed and/or the possibility to inspect the module.

A further solution may always provide an axial mechanical clamping action system in which the axial force is obtained thanks to a spring that pulls a pivot towards the hole 109. In this way, no thread is necessary. In this case, for example, the lifting of the pivot against the spring action could take place with a suitable magnet.

Obviously, the processing by removal of material must also be provided in the elements included between the top and bottom panel and therefore in the insulating layer and in layer 40.

If the insulating layer extends with a wider area in respect of a single panel (10, 20), obviously, the processing is replaced with a simple through hole in the insulating layer.

Having described the essential structural elements of the invention, an assembly example is here described to better understand the invention.

Firstly, the support axes 101 are arranged on the ground (as shown for example in figure 5). They are the supports on which the described modules will lay.

Possibly, these may also be fixed to the ground, for example through screws, bolts or also common glue.

Then it is possible to proceed by adjusting the height of these support axes so as to define the required height of the final screed in respect to the ground.

As mentioned, and as well known, an appropriate height allows to create advantageously a positioning slot for cables and wiring in general and also the air layer that is formed between the screed and the soil works as a further good thermal insulator.

At this point, the bottom panels 20, which are selected in such a number as to cover the entire predetermined area and as a function of the installed axes 101, can be arranged. Obviously, also the support axes are selected in number and positioning such as to cover the selected area proceeding in the assembly for micro-areas.

The modules near the perimeter of the wall may be cut out of perimetric shape and sized so as to go flush with the wall.

Assuming that a number of support axes 101 has been established, the bottom panels are laid down on these, as for example shown in figure 5.

Figure 5, or also figure 6, show only by way of nonlimiting example, four bottom panels (therefore, four modules) two by two, placed side by side, in such a way as to form a rectangular or squared-shaped screed. If the area to be covered is wider, of course, other support axes 101 and other modules can be placed side by side.

The circular tubular connecting elements are highlighted on the outside of each module only for descriptive clarity but they must be understood as incorporated in the module structure.

As shown in the example of figures 4, 5 and 6, each bottom panel lays on four axes 101 through its corners. In particular, each angle of each panel 20 lay on a table 106 in such a way that the hole 109 is slightly displaced in respect to the bevel of each module. On the single support 101 four corners are laying so that the bevels form the hole of the screw passage in axis with the hole 109, when the modules are pulled together.

In figure 5, therefore, it is highlighted for clarity purposes the screw 102 that penetrates in this point of intersection of the four panels 20 (point covered by the insulating layer in figure 5).

The insulating layer, as shown in figure 5, may for example have a length equal to the double length of the panel and an equal width to that of the panel. In such a case, it must be drilled in the screw passage point.

Alternatively, it could be of an identical size to that of the panel 20 and with the identically processed angle.

At this point, once all the axes 101 and the panels 20 are arranged with their insulating layer (which could also be a single surface), the proceeding provides the arrangement of the layer 40 and then the pipes. Finally, the whole in closed by applying the top panels 10 and by fixing them with the screws as figures 8, 9 and 10.

A single screw thus holds the four modules each other and also stacks together the component of such modules.

In the case of inspection, it is enough to remove the screw for removing segments of the module or the entire module.

As said, if it is required to better insulate the modules, the injection of an adhesive at the junction edge between a module and the flanked one can be provided, even if this makes disassembly difficult.

In a variation of the invention, although not optimal, the same structure described above might be provided, wherein, however, the insulating layer 30 and the sheet 40 are omitted and the fixing of pipes 50 of the heating system to the bottom panel is provided.

In this case, it might be obtained a more compact solution, wherein, however, a wider heat loss downwards takes place and with more difficulty in arranging the pipe coil (Styrofoam or polystyrene was in fact processed in order to form the slot inside it).

This heat loss can be partially offset by an adequate lifting height above the ground.

As described, this modular walkable surface is preferably of the raised type.

Therefore, nothing excludes the applicability of the expressed inventive concepts also to a modular structure applied in non-raised manner and thus maintaining the advantage to allow in any case the inspection of the internal heating elements and the replaceability of the modular elements themselves.

## Claims

1. A module (1) for the formation of a walkable surface, the module (1) comprising the following elements:
- A top panel (10) suitable for forming such walkable surface;
- A bottom panel (20);
- A thermally insulating surface (30) and a heating device (50) configured for emanating heat, both comprised between the bottom panel (20) and the top panel (10);
- The insulating surface being in form of a panel of insulating material (30) placed above the bottom panel (20) and with the heating device (50) comprising a pipe for the passage of a vector fluid arranged over the thermally insulating surface such that said pipe is comprised between the top panel (10) and the panel of insulating material (30);
- **Characterized in that** the thermally insulating surface (30) is a prebuilt element and wherein connecting means (100) are further provided and configured to exert a mechanical action according to an approaching direction of the top panel (10) to the bottom panel (20) in such a manner so as to keep the elements of the module stacked on each other, said connecting means being further configured to be removable in such a manner that, on removal, said elements constituting the module result in being separable and/or accessible each other.

2. A module (1), as per claim 1, wherein said connecting means (100) comprise an axial clamping assembly (101, 102, 102', 110).

3. A module (1), as per claim 2, wherein said axial clamping assembly (101, 102, 102', 110) comprises a supporting vertical axis (103, 107) forming a supporting surface (106) against which the bottom panel (20) of the module lies, so that said module appears raisable from the ground, said vertical axis (103, 107) further forming a receiving axial passage (109) within which an elongated element (102, 102') engages itself forming an enlarged exceeding (102') on the opposite side to that of insertion in the axial passage (109) in such a manner that this enlarged exceeding (102') can lie on a portion of a surface constituting the top panel (10) when such elongated element engages in the receiving axial passage (109) pressing the module against the supporting surface (106) on which the module lays at least in part.

4. A module (1), as per claim 3, wherein the vertical supporting axis (103, 17) is formed by a first vertical axis (103), having a support base to the ground (104), on which a second vertical axis (107), provided with the support surface (106) for the module, is fixed at different heights.

5. A module, as per claim 4, wherein the second vertical axis (107) is screwed to the first vertical axis (103) in such a manner so as to allow at the same time a variation of overall length of the vertical support axis or a fastening nut is provided fixing the second vertical axis to the first vertical axis.

6. A module (1), as per one or more of the previous claims from 3 to 5, wherein said vertical support axis (103, 107) is of variable length.

7. A module, as per one or more of the previous claims from 3 to 6, wherein said elongated element (102, 102') is longer than the overall thickness of the module.

8. A module, as per one or more of claims 3 to 7, wherein each module has a passing hole wherein such elongated element (102, 102') inserts itself.

9. A module, as per one or more of claims 3 to 8, wherein modules are shaped in such a manner that, once one or more modules are put near each other, a passage (200) which goes along the thickness of the modules placed side by side is generated allowing the insertion of the elongated element (102, 102') in such a manner that the elongated element engages itself in the axial passage (109) placed under the bottom panels, thus stacking together, through the enlarged exceeding, both the elements forming each module and at the same time relatively fixing each other said modules placed side by side, preferably said conformation being provided in the four angles of each module.

10. A module, as per one or more of the previous claims, wherein each module provides along its perimeter at least a removal of material such that at least two modules placed side by side form said passage, said removal of material being preferably provided in form of a bevel in the four angles of each module, in such a manner that an elongated element can fix each other four modules relatively.

11. A module (1), as per claim 9 or 10 when dependent on claim 3, wherein said passage is shaped in such a manner so as to form a countersink (111), forming a containment seat for a ring (110) which abuts against the exceeding (102').

12. A module (1), as per one or more of the previous claims when dependent on claim 3, wherein said elongated element (102, 102') is on choice in form of a screw (102) or a rivet or a bolt provided with threading to be screwed into the axial hole (109), being as well provided with equivalent threading.

13. A module (1), as per claim 1, wherein the panel of insulating material (30) forms a plurality of canalizations (31, 32) where said pipe is arranged.

14. A module (1), as per one or more of the previous claims, wherein a thermal-conductive panel (40) is further provided inserted between the top panel (10) and the heating device (50), preferably said metallic panel (40), tracing the canalizations obtained in the panel of insulating material (30), in such a manner so as to be applied on it, thus reproducing the canalizations for the pipe insertion.

## Patentansprüche

1. Modul (1) zur Bildung einer begehbaren Oberfläche, wobei das Modul (1) die folgenden Elemente umfasst:
- Eine oberseitige Platte (10), die zum Bilden einer solchen begehbaren Oberfläche geeignet ist;
- Eine unterseitige Platte (20);
- Eine wärmeisolierende Oberfläche (30) und eine Heizvorrichtung (50), die zum Abgeben von Wärme konfiguriert ist, die beide sind zwischen der unterseitigen Platte (20) und der oberseitigen Platte (10) enthalten;
- Wobei die isolierende Oberfläche in Form einer Platte aus Isoliermaterial (30) vorliegt, die über der unterseitigen Platte (20) angeordnet ist, und wobei die Heizvorrichtung (50) ein Rohr für den Durchgang eines Trägerfluids umfasst, das über der wärmeisolierenden Oberfläche angeordnet ist, so dass das Rohr zwischen der oberseitigen Platte (10) und der Platte aus Isoliermaterial (30) enthalten ist;
- **Dadurch gekennzeichnet, dass** die wärmeisolierende Oberfläche (30) ein vorgefertigtes Element ist und wobei ferner Verbindungsmittel (100) vorgesehen und konfiguriert sind, um eine mechanische Wirkung gemäß einer Annäherungsrichtung der oberseitigen Platte (10) an die unterseitige Platte (20) auszuüben, um die Elemente des Moduls aufeinander gestapelt zu halten, wobei die Verbindungsmittel ferner so konfiguriert sind, dass sie entfernbar sind, so dass es ergibt sich, dass beim Entfernen die Elemente, die das Modul ausbilden, voneinander trennbar und/oder zueinander zugänglich sind.

2. Modul (1) nach Anspruch 1, wobei die Verbindungsmittel (100) eine axiale Klemmbaugruppe (101, 102, 102', 110) umfassen.

3. Modul (1) nach Anspruch 2, wobei die axiale Klemmbaugruppe (101, 102, 102', 110) eine vertikale Stützachse (103, 107) umfasst, die eine Stützfläche (106) bildet, an der die unterseitige Platte (20) des Moduls anliegt, so dass das Modul vom Boden abhebbar wirkt, wobei die vertikale Achse (103, 107) ferner einen axialen Empfangsdurchgang (109) bildet, in den ein längliches Element (102, 102') eingreift und eine vergrößerte Überhöhung (102') auf der Seite gegenständig der zum Einführen in den axialen Durchgang (109) derart bildet, dass diese vergrößerte Überhöhung (102') auf einem Abschnitt einer Oberfläche liegen kann, die die oberseitige Platte (10) ausbildet, wenn ein solches längliches Element in den axialen Empfangsdurchgang (109) eingreift und das Modul gegen die Stützfläche (106) drückt, auf der das Modul zumindest teilweise aufliegt.

4. Modul (1) nach Anspruch 3, wobei die vertikale Stützachse (103, 17) durch eine erste vertikale Achse (103) gebildet ist, die eine Stützbasis zum Boden (104) aufweist, an der eine zweite vertikale Achse (107), die mit der Stützfläche (106) für das Modul versehen ist, in unterschiedlichen Höhen fixiert ist.

5. Modul nach Anspruch 4, wobei die zweite vertikale Achse (107) derart mit der ersten vertikalen Achse (103) verschraubt ist, dass gleichzeitig eine Variation der Gesamtlänge der vertikalen Stützachse ermöglicht wird, oder eine Befestigungsmutter vorgesehen ist, die die zweite vertikale Achse an der ersten vertikalen Achse fixiert.

6. Modul (1) nach einem oder mehreren der vorhergehenden Ansprüche 3 bis 5, wobei die vertikale Stützachse (103, 107) eine variable Länge aufweist.

7. Modul nach einem oder mehreren der vorhergehenden Ansprüche 3 bis 6, wobei das längliche Element (102, 102') länger als die Gesamtdicke des Moduls ist.

8. Modul nach einem oder mehreren der Ansprüche 3 bis 7, wobei jedes Modul ein Durchgangsloch aufweist, in das sich das längliche Element (102, 102') selbst einfügt.

9. Modul nach einem oder mehreren der Ansprüche 3 bis 8, wobei die Module so geformt sind, dass, sobald ein oder mehrere Module nahe beieinander platziert werden, ein Durchgang (200) erzeugt wird, der entlang der Dicke der nebeneinander angeordneten Module verläuft, was das Einführen des länglichen Elements (102, 102') in einer solchen Weise ermöglicht, dass das längliche Element in den axialen Durchgang (109), der unter den unterseitigen Platten angeordnet ist, eingreift, wodurch durch die vergrößerte Überhöhung beide Elemente, die jedes Modul bilden, gestapelt werden und gleichzeitig die nebeneinander angeordneten Module relativ zueinander fixiert werden, wobei vorzugsweise die Formgebung in den vier Winkeln jedes Moduls vorgesehen ist.

10. Modul nach einem oder mehreren der vorhergehenden Ansprüche, wobei jedes Modul entlang seines Umfangs mindestens einen Materialabtrag bereitstellt, sodass mindestens zwei nebeneinander angeordnete Module den Durchgang bilden, wobei der Materialabtrag vorzugsweise in Form einer Abschrägung in den vier Winkeln jedes Moduls bereitgestellt wird, sodass ein längliches Element vier Module relativ zueinander fixieren kann.

11. Modul (1) nach Anspruch 9 oder 10, wenn abhängig von Anspruch 3, wobei der Durchgang so geformt ist, dass er eine Ansenkung (111) bildet, die einen Enthaltesitz für einen Ring (110) bildet, der an der Überhöhung (102') anschlägt.

12. Modul (1) nach einem oder mehreren der vorhergehenden Ansprüche, wenn abhängig von Anspruch 3, wobei das längliche Element (102, 102') wahlweise in Form einer Schraube (102) oder eines Niets oder eines Bolzens ist, die mit einem Gewinde versehen sind, um in das axiale Loch (109) geschraubt zu werden, und ebenfalls mit einem äquivalenten Gewinde versehen sind.

13. Modul (1) nach Anspruch 1, wobei die Platte aus Isoliermaterial (30) eine Vielzahl von Kanalisierungen (31, 32) bildet, wo das Rohr angeordnet ist.

14. Modul (1) nach einem oder mehreren der vorhergehenden Ansprüche, wobei eine wärmeleitende Platte (40) ferner vorgesehen ist, die zwischen der oberseitigen Platte (10) und der Heizvorrichtung (50), vorzugsweise der metallischen Platte (40), eingefügt ist und die in der Platte aus Isoliermaterial (30) erhaltenen Kanalisierungen in einer solchen Weise verfolgt, dass sie darauf aufgebracht wird, wodurch die Kanalisierungen für das Einführen des Rohrs reproduziert werden.

## Revendications

1. Module (1) pour la formation d'une surface praticable, le module (1) comprenant les éléments suivants :
- un panneau supérieur (10) adapté pour la formation d'une telle surface praticable ;
- un panneau inférieur (20) ;
- une surface thermiquement isolante (30) et un dispositif de chauffage (50) configuré pour émettre de la chaleur, tous deux compris entre le panneau inférieur (20) et le panneau supérieur (10) ;
- la surface isolante se présentant sous la forme d'un panneau de matériau isolant (30) placé au-dessus du panneau inférieur (20) et le dispositif de chauffage (50) comprenant un tuyau pour le passage d'un fluide vecteur disposé au-dessus de la surface thermiquement isolante de telle sorte que ledit tuyau est compris entre le panneau supérieur (10) et le panneau de matériau isolant (30) ;
- **caractérisé en ce que** la surface thermiquement isolante (30) est un élément préconstruit et dans lequel des moyens de connexion (100) sont en outre prévus et configurés pour exercer une action mécanique selon une direction d'approche du panneau supérieur (10) vers le panneau inférieur (20) de manière à maintenir les éléments du module empilés les uns sur les autres, lesdits moyens de connexion étant en outre configurés pour être amovibles de manière à ce que, lors du retrait, lesdits éléments constituant le module soient séparables et/ou accessibles l'un à l'autre.

2. Module (1), selon la revendication 1, dans lequel lesdits moyens de connexion (100) comprennent un ensemble de serrage axial (101, 102, 102', 110).

3. Module (1), selon la revendication 2, dans lequel ledit ensemble de serrage axial (101, 102, 102', 110) comprend un axe de support vertical (103, 107) formant une surface de support (106) contre laquelle repose le panneau inférieur (20) du module, de sorte que ledit module apparaît comme élevable depuis le sol, ledit axe vertical (103, 107) formant en outre un passage axial de réception (109) dans lequel un élément allongé (102, 102') s'engage en formant un dépassement élargi (102') du côté opposé à celui de l'insertion dans le passage axial (109) de telle manière que ce dépassement élargi (102') puisse reposer sur une portion d'une surface constituant le panneau supérieur (10) lorsque cet élément allongé s'engage dans le passage axial de réception (109) en pressant le module contre la surface de support (106) sur laquelle le module repose au moins en partie.

4. Module (1) selon la revendication 3, dans lequel l'axe de support vertical (103, 17) est formé par un premier axe vertical (103), ayant une base de support au sol (104), sur lequel un second axe vertical (107), pourvu de la surface de support (106) pour le module, est fixé à différentes hauteurs.

5. Module selon la revendication 4, dans lequel le deuxième axe vertical (107) est vissé au premier axe vertical (103) de manière à permettre en même temps une variation de la longueur totale de l'axe de support vertical ou un écrou de fixation est prévu pour fixer le deuxième axe vertical au premier axe vertical.

6. Module (1), selon l'une ou plusieurs des revendications précédentes de 3 à 5, dans lequel ledit axe de support vertical (103, 107) est de longueur variable.

7. Module, selon l'une ou plusieurs des revendications précédentes de 3 à 6, dans lequel ledit élément allongé (102, 102') est plus long que l'épaisseur totale du module.

8. Module selon l'une ou plusieurs des revendications 3 à 7, dans lequel chaque module possède un trou de passage dans lequel s'insère l'élément allongé (102, 102').

9. Module, selon l'une ou plusieurs des revendications 3 à 8, dans lequel les modules sont façonnés de telle manière que, une fois qu'un ou plusieurs modules sont placés les uns près des autres, un passage (200) qui longe l'épaisseur des modules placés côte à côte est généré permettant l'insertion de l'élément allongé (102, 102') de telle manière que l'élément allongé s'engage dans le passage axial (109) placé sous les panneaux inférieurs, empilant ainsi, par le dépassement élargi, les deux éléments formant chaque module et, en même temps, fixant relativement les uns aux autres lesdits modules placés côte à côte, de préférence ladite conformation étant fournie aux quatre angles de chaque module.

10. Module, selon l'une ou plusieurs des revendications précédentes, dans lequel chaque module présente sur son périmètre au moins un enlèvement de matériau tel qu'au moins deux modules placés côte à côte forment ledit passage, ledit enlèvement de matériau étant de préférence prévu sous forme d'un biseau aux quatre angles de chaque module, de telle manière qu'un élément allongé puisse fixer relativement chacun des quatre autres modules.

11. Module (1), selon la revendication 9 ou 10 lorsqu'elle dépend de la revendication 3, dans lequel ledit passage est façonné de manière à former une fraisure (111), formant un siège de confinement pour un anneau (110) qui vient en butée contre le dépassement (102').

12. Module (1), selon l'une ou plusieurs des revendications précédentes lorsqu'elles dépendent de la revendication 3, dans lequel ledit élément allongé (102, 102') se présente au choix sous la forme d'une vis (102) ou d'un rivet ou d'un boulon pourvu (e) d'un filetage pour être vissé dans le trou axial (109), étant également pourvu d'un filetage équivalent.

13. Module (1), selon la revendication 1, dans lequel le panneau de matériau isolant (30) forme une pluralité de canalisations (31, 32) où ledit tuyau est disposé.

14. Module (1), selon l'une ou plusieurs des revendications précédentes, dans lequel un panneau thermoconducteur (40) est en outre prévu inséré entre le panneau supérieur (10) et le dispositif de chauffage (50), de préférence ledit panneau métallique (40), traçant les canalisations obtenues dans le panneau de matériau isolant (30), de manière à être appliqué sur ce dernier, reproduisant ainsi les canalisations pour l'insertion du tuyau.
